Europäisches Patentamt

European Patent Office

Office européen des brevets

(11) Publication number: **0 249 996 B1**

# EUROPEAN PATENT SPECIFICATION

(45) Date of publication of patent specification: **18.03.92**  (51) Int. Cl.⁵: **G11B 7/00**, G11B 27/36

(21) Application number: **87108833.2**

(22) Date of filing: **19.06.87**

(54) **Optical recording and reproducing apparatus.**

(30) Priority: **20.06.86 JP 145104/86**
**22.09.86 JP 224471/86**
**22.09.86 JP 224472/86**

(43) Date of publication of application:
**23.12.87 Bulletin 87/52**

(45) Publication of the grant of the patent:
**18.03.92 Bulletin 92/12**

(84) Designated Contracting States:
**DE FR GB**

(56) References cited:
**EP-A- 0 089 021**
**EP-A- 0 158 193**
**EP-A- 0 190 349**

(73) Proprietor: **MATSUSHITA ELECTRIC INDUSTRI-
AL CO., LTD.**
**1006, Oaza Kadoma**
**Kadoma-shi, Osaka-fu, 571(JP)**

(72) Inventor: **Koishi, Kenji**
**3-4-38, Matsuodai Inagawa-cho**
**Kawabe-gun Hyogo-ken(JP)**
Inventor: **Matsuo, Tamotsu**
**4-1-13,Uchindai-cho Miyakojima-ku**
**Osaka-shi Osaka-fu(JP)**

(74) Representative: **Eisenführ, Speiser & Strasse**
**Martinistrasse 24**
**W-2800 Bremen 1(DE)**

## Description

The present invention relates to an optical recording and reproducing apparatus which is adapted to record the information on an optical disc capable of recording, reproducing operations to reproduce the recorded information form the disc.

From EP-A2-0089021 an optical recording and reproducing apparatus is known which includes a track jump detecting means comprising a sample-and-hold circuit, an envelope detector, a comparator and a mask signal generator. The detector consists of a normal photosensor producing a photoelectric signal. In the recording mode, if a tracking error occurs for any reason and the laser spot jumps to an already recorded track, a signal component corresponding to the recording data appears in the photoelectric signal in form of a level variation. This data signal component passes through the sample-and-hold circuit which is controlled by a mask signal generated by the mask signal generator. Therefore, the output from the sample-and-hold circuit varies in response to the data signal component. This output is supplied to the envelope detector which detects the envelope of the output. An envelope singnal from the envelope detector is supplied to the comparator and is compared with a slice level signal, and the output from the comparator goes to low level. This low-level-signal is supplied to an AND gate which prevents the recording data from supplying to the laser source. As a result, the laser source is not supplied with recording data anymore.

Such a conventional track jump detecting circuit is rather complicated and requires two further external signals, namely the recording data supplied to the mask signal generator and the slice level signal supplied to the comparator, in addition to the signal generated by the photosensor. It has been found that such complicated circuit often fails and, thus, does not operate in a reliable way. In case a failure occurs in the track jump detecting means, a tracking error cannot be detected and, thus, overlay recording cannot be prevented.

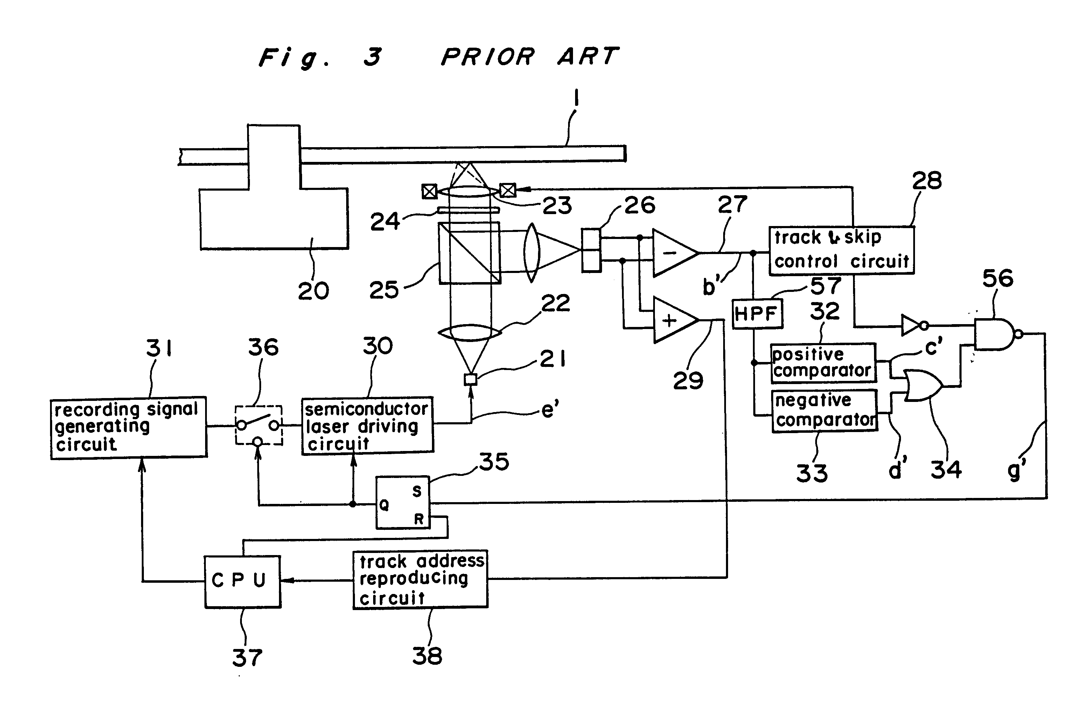

Fig. 3 shows the construction view of a further conventional optical recording and reproducing apparatus. In the drawings, the optical disc 1 is rotated by the disc motor 20. The lights coming from the light source 21 of the semiconductor or the like are collected by the collimator lens 22 and are focused into the light spot of about 1 $\mu$m $\phi$ on the optical disc 1 by the focus lens 23. The reflection lights coming from the optical disc 1 are separated by the $\lambda/4$ plate 24 and the polaroid beam splitter 25 and are guided into the two-division photo detector 26. The photo detector 26 is placed so that the division line becomes parallel to the track on the optical disc 1. The tracking error signal 27 of the two-division photo detector 26 drives the focus lens 23 in the right-angled direction to the track through the tracking jumping control circuit 28 with the tracking control being applied upon it. Also, the reproducing signal output 29 is used in the reproduction of the record signal and the reproduction of the track address. The light source 21 of the semiconductor laser or the like is set on the reproduction power or the record power by the driving circuit 30. The record signal such as the digital signal, the video signal or the like is generated by the recording signal generating circuit 31 to modulate the power of the semiconductor laser during the recording operation.

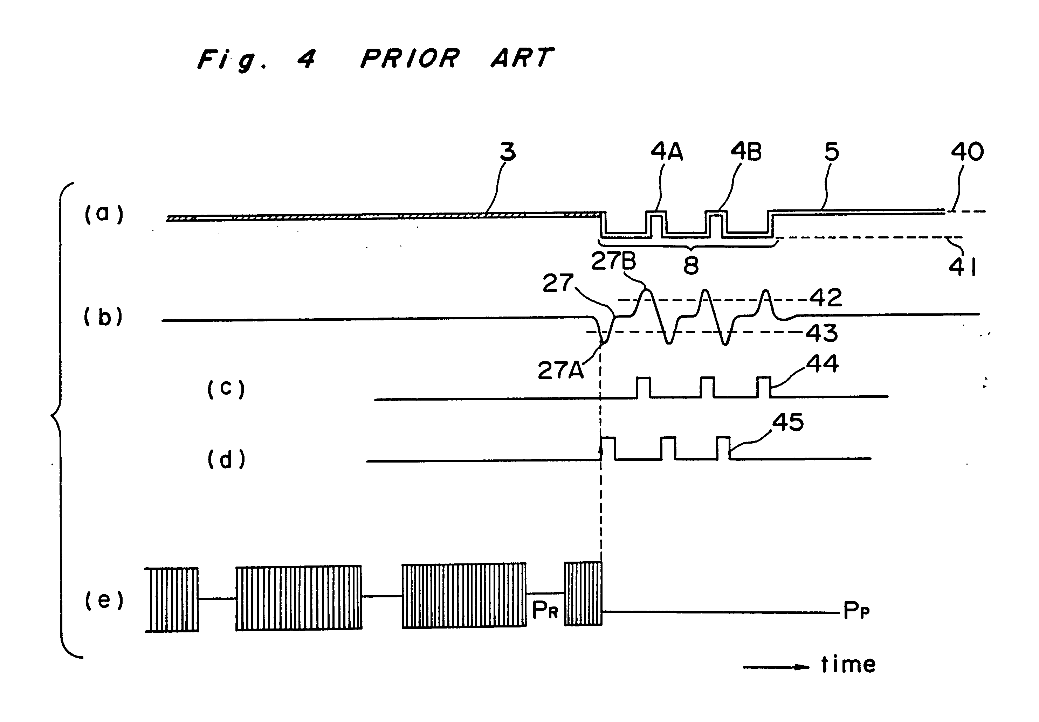

Fig. 4 shows the signal waveforms of each portion in a case where the track skipping has been caused. The b through e in Fig. 3 are the observation points of the signal waveforms b through e of Fig. 4. THe a shows the track sectional view in the scanning direction of the light beam, which is a view seen from the light beam. Reference numeral 40 shows the groove track, indicating its level. Reference numeral 41 shows the flat portion between the grooves, indicating its level. Reference numeral 3 shows the track which is being recorded with the black portion shows the photographic portion. When the track skipping 8 is caused, it crosses the tracks of 4A, 4B to show that the tracking servo is applied upon the jumped track 5. Fig. 4(b) shows the output waveform of the tracking error signal 27, which becomes the track crossing signal (27A, 27B). When the tracking servo is applied upon groove track 40, the level of the error signal naturally becomes near the zero as shown in Fig. 4(b). If the falling edge of the waveforms of 27A, that is, the moment the tracking is disengaged from the track 3 which is being recorded, the track skipping 8 may be detected without the scanning operation of the record beam upon the other track. When the waveforms of the error signal 27 of Fig. 4(b) are outputted through comparison at the threshold value of 42 in the positive comparator 32 (Fig. 3), and at the threshold value of 43 in the negative comparator 33 (Fig. 3), the track skip detecting signals 44, 45 of Fig. 4-(c) and (d) are provided.

In Fig. 3, the track skipping pulse signals of Fig. 4(c) and 4(d) are provided to the OR gate 34. And the flip-flop 35 is set by the output to open the analog gate 36 to break the recording signal generating circuit 31 and the semiconductor laser driving circuit 30 and to reduce from the record power to the reproduction power the optical power of the semiconductor laser driving circuit 30. Fig. 4(e) shows the light output waveforms of the semiconductor laser.

However, in such construction as described hereinabove, the track skipping cannot be correctly detected when the setting of the threshold value of the comparators 32, 33 is correct, the input level of the track crossing signal becomes smaller than at the initial setting time. Thus, it is impossible to completely prevent the error record, the double record. Also, the error record, the double record cannot be completely prevented, because the controlling operation for switching from the record power to the reproduction power cannot be effected even when the digital circuits 34, 35, 36 constituting the write protecting function break down.

It is an object of the present invention to provide an optical recording and reproducing apparatus having a track jump detecting means which operates in a more reliable way.

To achieve this object, according to the invention it is provided an optical recording and reproducing apparatus comprising

an optical recording and reproducing means for focusing a laser light source onto an optical disc having a guide track so as to record or reproduce information;

a detector for receiving a reflected light from the optical disc;

a track jump detecting means coupled to the detector for detecting a track crossing signal; and a write protecting means for changing by means of said track jump detecting means the optical power level of the laser light source from a recording state (PR) to a non-recording state (PP);

characterized in that

the detector is of binary light type provided with a divided line being disposed in parallel to the track, the differential signal output of the detector being the track crossing signal; and

a self-diagnosing means is provided for checking whether said track jump detecting means and said write protecting means normally operate or not.

The track jump detecting means according to the invention is rather simple in its design and, thus, more reliable than the prior art means. No further signals in addition to the signal output from the detector are required. This is achieved by provision of a detector which is of binary light type provided with the divided line being disposed in parallel to the track and which generates a differential output signal which can directly used as the required track crossing signal. No further elements are necessary to derive the track crossing signal from the detector signal.

In order to check whether the track jump detecting means and the write protecting means normally operate or not, a self-diagnosing means is additionally provided according to the invention. Such means detects and prevents a malfunction of the track jump detecting means and the write protecting means which malfunction also leads to an undesired overlay recording.

Thus, the essential feature of the present invention resides in an optical recording and reproducing apparatus wherein an abnormal track jump generated during the record is automatically detected in addition to check the operation for preventing a mis-record in a more reliable way than the prior art, and the recording optical power can be changed immediately into the reproducing optical power.

EP-A1-0158193 discloses an optical disc recording and reproducing apparatus in which a diode is provided for monitoring whether a laser diode is operated normally or not. However, this known apparatus does not comprises a detector for receiving a reflected light from the optical disc during recording. The monitoring diode only receives part of the light emitted from the laser diode, but not a reflected light from the optical disc.

According to a preferred embodiment of the invention the self-diagnosing means is constructed to generate an artificial write gate signal which does not become a recording state, and generate a track crossing signal by actuating a track jump while said self-diagnosing means is generating the artificial write gate signal, and check whether or not said track jump detecting means and said write protecting means normally operate.

These and other objects and features of the present invention will become apparent from the following description taken in conjunction with the preferred embodiment thereof with reference to the accompanying drawings, in which;

Fig. 1 shows block diagrams of an optical recording and reproducing apparatus in a preferred embodiment of the present invention;

Fig. 2 shows operation waveform charts of the same embodiment;

Fig. 3 shows block diagrams of the conventional optical recording and reproducing apparatus;

Fig. 4 shows the operation waveform charts of the conventional embodiment; and

Fig. 5 shows a flow chart of the program of a CPU included in the apparatus.

Before the description of the present invention proceeds, it is to be noted that like parts are designated by like reference numerals throughout the accompanying drawings.

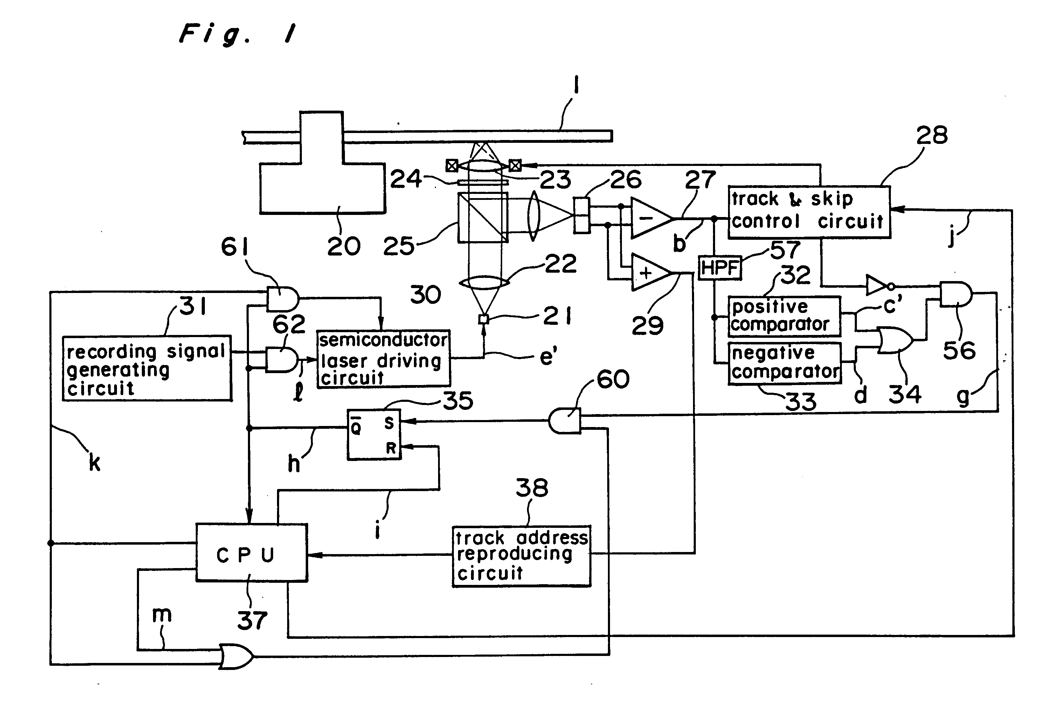

Referring now to the drawings, there is shown in Fig. 1 the construction view of the optical recording and reproducing apparatus in a preferred embodiment of the present invention.

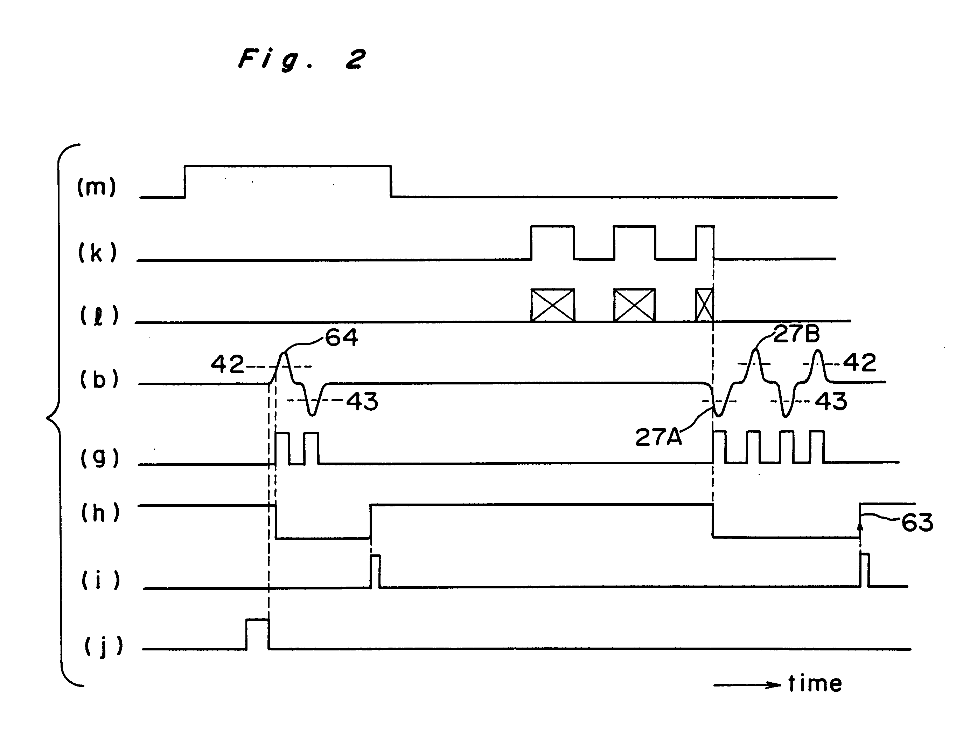

When the write gate signal K is outputted from the CPU, the recording signal $\ell$ is inputted into the semiconductor laser driving circuit 30 from the recording signal generating circuit 31 to modulate the recording light. Fig. 2 shows the signal waveform charts in each portion of Fig. 1. The write gate signal K is inputted into the AND gate 60, the signal g which is the track crossing signal binary-coded by the comparators 32, 33 may be inputted into the flip-flop 35. If the track skipping is caused, the track crossing signal (Fig. 2, 27A, 27B) is caused, the flip-flop 35 is set, the Q output becomes L in level as shown in Fig. 2(h). Accordingly, the AND gates 61, 62 are turned off and the gate signal K, the recording signal 1 are inputted into the semiconductor laser driving circuit 30 no longer. The condition becomes the reproducing one from the recording condition simultaneously with the track skipping to prevent the double recording or the error recording. The write protecting signal h is released (Fig. 2, 63) by the resetting signal i after the track address which is being reproduced at the present time is sent to the CPU 37 and is confirmed by a track address reproducing circuit 38.

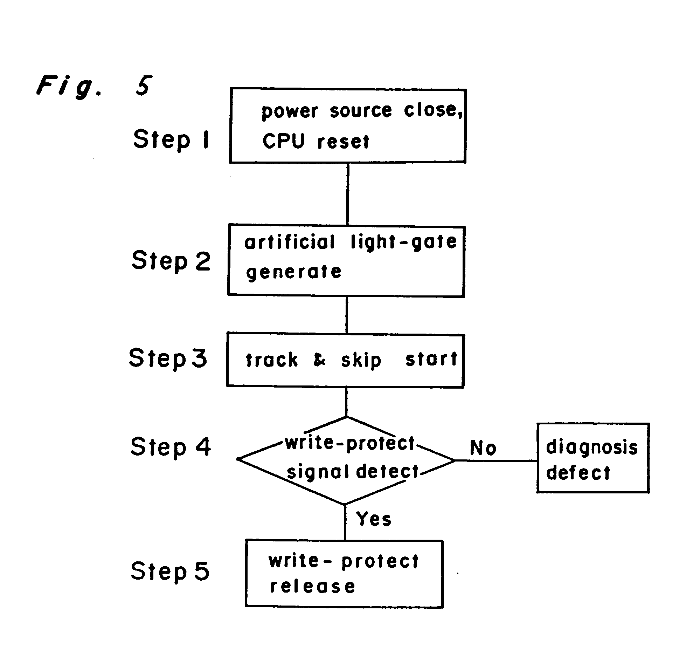

The diagnosis method for the operation confirmation of the abnormal track detection, the write protecting function will be described hereinafter with the flow chart (Fig. 5) of the CPU program. This diagnostic means function is operated at the power on of the optical recording and reproducing apparatus shown in Fig. 1 or at the CPU resetting time (step 1). The artificial write gate signal m from the CPU 37 is outputted from the outport (step 2). Then, one normal track jumping is forced to be performed to confirm the abnormal track skip detection. Thus, the track jump starting signal J is inputted into the tracking jumping control circuit from the CPU 37 (step 3). The track crossing signal 64 is caused by one normal track jumping, the binary-coded signal g passes the AND gate 60 which has been inputted by the artificial write gate signal to set the flip-flop 35 so that the $\bar{Q}$ output (write protecting signal h) becomes L in level. The CPU reads this write protecting signal h from the import to confirm that the operations of the normal track skip detection, the write protecting function are normal (step 4), to output the resetting signal i of the write protection (step 5). At this time, the artificial write gate signal m is not inputted into the semiconductor laser driving circuit 30 and the condition does not become the record power one. Accordingly, it is possible to perform the diagnosis of checking the normal track skip detection, the write protecting function without actually turning the semiconductor laser into the record mode.

As described hereinabove, according to the present embodiment, the artificial write gate signal is caused, the track jump is started while the artificial write gate signal is being generated to cause the track crossing signal. The diagnosis function for confirming the correct operation of the abnormal track skipping detection and the write protecting function is provided, so that the diagnosis may be performed without turning the semiconductor laser into the record power condition. Thus, the error recording, the double recording may be positively prevented, which are caused by the abnormal track skipping.

As described hereinabove, according to the present invention, the diagnosis function for confirming the correct operation of the abnormal track skip detecting means and the write protecting means may be operated with the artificial write gate signal without causing the abnormal track skipping under the recording condition. The abnormal track skipping detection and the write protecting function which are provided to completely prevent the error recording, the double recording, which cause the unexpected abnormal track skipping, thus resulting in considerable improvements in the recording data reliability on the optical disc.

## Claims

1. An optical recording and reproducing apparatus comprising
   an optical recording and reproducing means (22 - 26) for focusing a laser light source (21) onto an optical disc (1) having a guide track so as to record or reproduce information;
   a detector (26) for receiving a reflected light from the optical disc (1);
   a track jump detecting means (28, 37) coupled to the detector (26) for detecting a track crossing signal; and
   a write protecting means (35) for changing by means of said track jump detecting means (28, 37) the optical power level of the laser light source (21) from a recording state (PR) to a non-recording state (PP);
   characterized in that
   the detector (26) is of binary light type provided with a divided line being disposed in parallel to the track, the differential signal output (27) of the detector (26) being the track crossing signal; and
   a self-diagnosing means (37, 60) is provided for checking whether said track jump detecting means (28, 37) and said write protecting means (35) normally operate or not.

2. An optical recording and reproducing apparatus as claimed in Claim 1, wherein said self-diagnosing means (37, 60) is constructed to generate an artificial write gate signal (m) which does not become a recording state (PR), and generate a track crossing signal by actuating a track jump while said self-diagnosing means (37, 60) is generating the artificial write gate signal (m), and check whether or not said track jump detecting means (28, 37) and said write protecting means (35) normally operate.

**Revendications**

1. Appareil optique d'enregistrement et de reproduction comprenant

un moyen d'enregistrement et de reproduction optique (22-26) pour focaliser une source de lumière laser (21) sur un disque optique (1) ayant une piste de guidage de manière à enregistrer ou à reproduire une information ;

un détecteur (26) pour recevoir une lumière réfléchie depuis le disque optique (1) ;

un moyen de détection de saut de piste (28, 37) couplé au détecteur (26) pour détecter un signal de traversée de piste ; et

un moyen de protection d'écriture (35) pour changer, au moyen dudit moyen de détection de saut de piste (28, 37) , le niveau d'énergie optique de la source de lumière laser (21) d'un état d'enregistrement (PR) à un état de non enregistrement (PP) ;

caractérisé en ce que :

le détecteur (26) est du type à lumière binaire et est muni d'une ligne de division qui est disposée parallèlement à la piste, la sortie de signal différentiel (27) du détecteur (26) étant le signal de traversée de piste ; et

un moyen d'auto-diagnostic (37, 60) est prévu pour vérifier si oui ou non ledit moyen de détection de saut de piste (28, 37) et ledit moyen de protection d'écriture (35) fonctionnent normalement ou non.

2. Appareil optique d'enregistrement et de reproduction selon la revendication 1, dans lequel ledit moyen d'auto-diagnostic (37, 60) est construit de manière à générer un signal de commande d'écriture artificiel (m) qui ne devient pas un état d'enregistrement (PR) et de manière à générer un signal de traversée de piste en provoquant un saut de piste tandis que ledit moyen d'autodiagnostic (37, 60) est en train de générer le signal de commande d'écriture artificiel (m), et de manière à vérifier si oui ou non ledit moyen de détection de saut de piste (28, 37) et ledit moyen de protection d'écriture (35) fonctionnent normalement.

**Patentansprüche**

1. Optische Aufzeichnungs- und Wiedergabevorrichtung mit

einer optischen Aufzeichnungs- und Wiedergabeeinrichtung (22 bis 26) zur Fokussierung einer Laserlichtquelle (21) auf eine optische Scheibe (1) mit einer Führungsspur, um Informationen aufzuzeichnen und wiederzugeben;

einem Detektor (26) zum Empfang eines reflektierten Lichtes von der optischen Scheibe (1);

einer an den Detektor (26) angeschlossenen Spursprungerfassungseinrichtung (28, 37) zur Erfassung eines Spurkreuzungssignals; und

einer Schreibschutzeinrichtung (35) zur Veränderung des optischen Energiewertes der Laserlichtquelle (21) von einem Aufzeichnungszustand (PR) in einen Nichtaufzeichnungszustand (PP) mit Hilfe der Spursprungerfassungseinrichtung (28, 37);

dadurch gekennzeichnet, daß

der Detektor (26) aus einer Binärlicht-Ausführung besteht, die mit einer parallel zur Spur verlaufenden geteilten Linie versehen ist, wobei das Differentialausgangssignal (27) des Detektors (26) das Spurkreuzungssignal ist; und

eine Selbstdiagnostiziereinrichtung (37, 60) für eine Prüfung vorgesehen ist, ob die Spursprungerfassungseinrichtung (28, 37) und die Schreibschutzeinrichtung (35) normal arbeiten oder nicht.

2. Optische Aufzeichnungs- und Wiedergabevorrichtung nach Anspruch 1, bei welcher die Selbstdiagnostiziereinrichtung (37, 60) aufgebaut ist, um ein künstliches Schreibgattersignal zu erzeugen, das einen Aufzeichnungszustand (PR) nicht einnimmt, und ein Spurkreuzungssignal aufgrund eines Spursprunges zu erzeugen, während die Selbstdiagnostiziereinrichtung (37, 60) das künstliche Schreibtorsignal (m) erzeugt, und zu prüfen, ob die Spursprungerfassungseinrichtung (28, 37) und die Schreibschutzeinrichtung (35) normal arbeiten oder nicht.

Fig. 1

EP 0 249 996 B1

# Fig. 2

(m)

(k)

(ℓ)

(b)   42  64   27B  42
      43        27A  43

(g)

(h)           63

(i)

(j)

→ time

EP 0 249 996 B1

7

Fig. 3 PRIOR ART

EP 0 249 996 B1

Fig. 4 PRIOR ART

EP 0 249 996 B1

*Fig. 5*

| | |
|---|---|
| Step 1 | power source close, CPU reset |
| Step 2 | artificial light-gate generate |
| Step 3 | track & skip start |
| Step 4 | write-protect signal detect |
| | Yes |
| Step 5 | write-protect release |

No → diagnosis defect